# EUROPÄISCHE PATENTANMELDUNG

(11) **EP 1 883 150 A2**
(43) Veröffentlichungstag der Anmeldung: **30.01.2008**
(21) Anmeldenummer: 07112977.9
(22) Anmeldetag: 24.07.2007
(51) Int. Cl.: H02K 17/16

(54) **Läufer einer elektrischen Asynchronmaschine**

(30) Priorität: 26.07.2006 DE 102006034577
(71) Anmelder: SIEMENS AKTIENGESELLSCHAFT, 80333 München (DE)
(72) Erfinder: Gmeiner, Robert, 92259, Neukirchen (DE)

(57) **Zusammenfassung**

Der Läufer (3) einer elektrischen Asynchronmaschine (1) umfasst ein in Richtung einer Drehachse (7) geschichtetes Läuferblechpaket (8), das mit in Umfangsrichtung gleichmäßig verteilt angeordneten elektrischen Leitern versehen ist. Das Läuferblechpaket (8) umfasst mindestens einen gewölbten Abschnitt (17) mit einer äußeren Umfangsfläche (21), die im Stillstand eine nach innen gewölbte Kontur (18) hat. Dadurch werden während des Betriebs auftretende Verbiegungen des Läuferblechpakets (8) kompensiert.

## Beschreibung

Die Erfindung betrifft einen Läufer einer elektrischen Asynchronmaschine, der ein in Richtung einer Drehachse geschichtetes Läuferblechpaket umfasst, das mit in Umfangsrichtung gleichmäßig verteilt angeordneten elektrischen Leitern versehen ist.

Derartige Läufer kommen derzeit häufig bei Asynchronmaschinen zum Einsatz, insbesondere als Kurzschlusskäfigläufer. Bei der elektrischen Maschine kann es sich sowohl um einen Generator als auch um einen Motor handeln.

Der Wirkungsgrad und auch das sonstige Verhalten solcher Asynchronmaschinen hängen wesentlich von dem Luftspalt zwischen dem auf einer drehbar gelagerten Welle montierten Läufer und dem Ständer ab. So führt ein kleiner Luftspalt zu einem günstigen Wirkungsgrad und zu einem guten Anzugsmoment beim Anlaufen eines Asynchronmotors. Andererseits sind einer beliebigen Reduzierung des Luftspalts mechanische Grenzen gesetzt. Der während des Betriebs teils sehr schnell rotierende Läufer darf keinesfalls den Ständer berühren. Ansonsten droht eine Beschädigung oder Zerstörung der Maschine.

In der DE 25 25 548 A1 ist ein Elektromotor beschrieben, dessen Läufer ein Dämpfungssystem mit einem Zwischenrohr zur Unterdrückung transversaler Schwingungen umfasst. Diese Dämpfungsmaßnahme ist aufwändig und hat außerdem einen gewissen Platzbedarf, der oft nicht zur Verfügung steht.

Die Aufgabe der Erfindung besteht deshalb darin, einen Läufer der eingangs bezeichneten Art anzugeben, der ohne großen Aufwand und Zusatzplatzbedarf einen hohen Wirkungsgrad der Asynchronmaschine ermöglicht.

Diese Aufgabe wird gelöst durch die Merkmale des unabhängigen Patentanspruchs 1. Das Läuferblechpaket des erfindungsgemäßen Läufers enthält mindestens einen gewölbten Abschnitt mit einer äußeren Umfangsfläche, die im Stillstand eine nach innen gewölbte Kontur hat.

Der erfindungsgemäße Läufer zeichnet sich insbesondere dadurch aus, dass seine äußere Umfangsfläche möglichst gut an die Biegekontur oder Biegelinie z.B. bei Nennlast angepasst ist. Die Anpassung ist umgekehrt proportional zu der erwarteten Verbiegung. An den Stellen, an denen es während des Betriebs zu der größten Verbiegung nach außen kommt, ist der geringste Außendurchmesser des Läufers vorgesehen. Dies ist in der Regel und insbesondere bei einer symmetrischen Lagerung der das Läuferblechpaket tragenden Welle und bei einem auch ansonsten symmetrischen Aufbau der Asynchronmaschine die axiale Läufermitte. Grundsätzlich kann die maximale Verbiegung und damit der Ort, an dem der erfindungsgemäße Läufer im Stillstand den kleinsten Außendurchmesser aufweist, aber auch an einer anderen axialen, d.h. in Richtung der Drehachse betrachteten Position vorgesehen sein.

Die nach innen gewölbte Kontur des erfindungsgemäßen Läufers wird insbesondere durch eine nachträgliche Bearbeitung des aus den Einzelblechen zusammengesetzten Läuferblechpakets hergestellt, beispielsweise durch ein Überdrehen mittels einer numerisch gesteuerten Drehmaschine. Davor weisen die Einzelbleche noch im Wesentlichen den gleichen Außendurchmesser auf. Bei der nach dem Zusammenfügen des Läuferblechpakets vorgenommenen Nachbearbeitung erfolgt also ein radialer Materialabtrag, dessen Ausmaß sich nach der an dieser axialen Position während des Betriebs zu erwartenden radial nach außen gerichteten Verbiegung orientiert.

Das erfindungsgemäße Läuferblechpaket hat folglich insbesondere innerhalb des gewölbten Abschnitts eine an die Verbiegung während des Betriebs angepasste, bzw. eine diese Verbiegung kompensierende Kontur. Die Herstellung derselben ist mit vergleichsweise geringem Aufwand möglich. Die erfindungsgemäße Maßnahme der nach innen gewölbten Struktur erfordert darüber hinaus keinen Zusatzplatz. Sie spart im Gegenteil sogar Platz ein.

Die bei der Dimensionierung des Luftspalts ansonsten vorgesehene Sicherheitsreserve kann nämlich reduziert oder sogar komplett weggelassen werden. Es sind kleinere Werte für den Luftspalt möglich, ohne dass dadurch die Gefahr einer Zerstörung ansteigt. So ausgelegte Asynchronmaschinen haben einen besseren Wirkungsgrad und ein besseres Anlaufverhalten.

Vorteilhafte Ausgestaltungen des erfindungsgemäßen Läufers ergeben sich aus den Merkmalen der von Anspruch 1 abhängigen Ansprüche.

Günstig ist eine Variante, bei der die gewölbte Kontur konkav ausgebildet ist. Bei einem Längsschnitt durch das Läuferblechpaket und insbesondere durch den gewölbten Abschnitt ergibt sich dann eine insbesondere bikonkave Form. Eine derartige konkave Kontur lässt sich zum einen sehr gut herstellen. Zum anderen entspricht sie in sehr guter Näherung dem Biegeverhalten eines symmetrisch beidseitig gelagerten Läufers, der vorzugsweise keine gezielt eingebrachten Unsymmetrien und/oder Unwuchten aufweist.

Gemäß einer anderen bevorzugten Variante weist das Läuferblechpaket in Richtung der Drehachse betrachtet eine Läufermitte auf, und ein Außenumfang des Läuferblechpakets nimmt zur Läufermitte hin ab. Bei einer symmetrischen Lagerung und einer symmetrischen Ausgestaltung des Läufers ist die Verbiegung in der Läufermitte am größten. Dementsprechend ist es günstig, wenn gerade hier der kleinste Außenumfang vorgesehen ist.

Vorteilhaft ist es außerdem, wenn das Läuferblechpaket mehrere in Richtung der Drehachse hintereinander angeordnete Abschnitte umfasst, wobei benachbarte Abschnitte jeweils eine unterschiedlich ausgebildete äußere Umfangsfläche aufweisen. Insbesondere können drei, fünf oder sieben Abschnitte oder eine andere ungerade Anzahl an Abschnitten vorgesehen sein. Mittels der verschiedenen Abschnitte kann die Außenkontur des Läufers besonders exakt an die Biegekontur, insbesondere auch an kompliziertere Konturen, angepasst werden. In jedem Abschnitt kann eine andere Außenkontur insbesondere ein anderer Außendurchmesser vorgesehen sein. So lässt sich der Verlauf der Biegekontur sehr gut nach den Gesetzen der Interpolation nachbilden. Eine ungerade Anzahl an Abschnitten bietet sich vor allem bei einem axial symmetrischen Verlauf der Biegekontur an. An einen zentralen Abschnitt schließen sich in beide axiale Richtungen jeweils paarweise gleich ausgebildete Abschnitte an.

Bei einem symmetrischen Verlauf der Biegekontur ist es auch besonders günstig, wenn sich der gewölbte Abschnitt in Richtung der Drehachse betrachtet im Bereich einer Läufermitte befindet. Dort sind die Krümmungsradien der Verbiegung dann am größten. Der gewölbte Abschnitt eignet sich dementsprechend am besten zur Anpassung an die Biegekrümmung in diesem Bereich.

Vorteilhaft ist es weiterhin, wenn das Läuferblechpaket einen maximalen und einen minimalen Außenumfang aufweist, und eine Abweichung zwischen dem maximalen und dem minimalen Außenumfang im Bereich zwischen einigen 100 µm und einigen 1 mm liegt. In diesem Bereich bewegen sich typische Auslenkungen der Läuferverbiegung während des Betriebs. Ein dementsprechender Materialabtrag am Läufer bewirkt folglich eine sehr gute Kompensation.

Vorzugsweise variiert außerdem ein Abstand der elektrischen Leiter von der äußeren Umfangsfläche in Richtung der Drehachse betrachtet. Dieser Abstand ist mit verantwortlich für das Anlaufverhalten der Asynchronmaschine. Er wird deshalb auch als Anlauf bezeichnet. Günstig ist ein möglichst gleich bleibender Abstand von der äußeren Umfangsfläche, insbesondere unabhängig von deren unebener, insbesondere gewölbter Kontur. Außerdem ist insbesondere aus elektrischen Gründen ein vorgegebener Abstand möglichst über die gesamte aktive axiale Länge des Läufers einzuhalten. Dieser Abstand wird durch Ausstanzungen in den Einzelblechen definiert. Für eine exakte Anpassung des Anlaufs an eine später aufgrund der Nachbearbeitung gewölbt ausgebildete und/oder mit Unstetigkeitsstellen versehene Außenkontur des Läuferpakets müssten fast alle Einzelbleche mit gesonderten Geometrievorgaben und damit einzeln gestanzt werden. Um diesen Fertigungsaufwand zu begrenzen, werden nur abschnittsweise veränderte Geometrieparameter vorgesehen, sodass immer noch ein großer Teil der Einzelbleche nach gleichen Vorgaben gestanzt werden kann. Als Folge davon ist der Anlauf nicht über die gesamte axiale Länge konstant. Er verändert sich leicht. Dies vereinfacht die Fertigung erheblich, beeinträchtigt das elektrische Verhalten jedoch nicht nennenswert.

Günstig ist weiterhin eine Variante, bei der der Abstand der elektrischen Leiter von der äußeren Umfangsfläche an axialen Enden des Läuferblechpakets im Bereich zwischen 1,04 mm und 1,56 mm liegt. Ebenso günstig ist es außerdem, wenn der Abstand der elektrischen Leiter von der äußeren Umfangsfläche in einer axialen Läufermitte des Läuferblechpakets im Bereich zwischen 1,1 mm und 1,58 mm liegt. Mit Werten aus diesen genannten besonders vorteilhaften Bereichen lassen sich die Anläufe für die meisten typischen Anwendungen sehr gut dimensionieren.

Darüber hinaus ist es im Rahmen einer anderen bevorzugten Ausgestaltung vorgesehen, dass die elektrischen Leiter als in Nuten des Läuferblechpakets eingegossene Stäbe, insbesondere aus Aluminium oder Kupfer, ausgebildet sind. Diese Nuten sind insbesondere durch die bereits angesprochenen Ausstanzungen in den Einzelblechen gebildet, wenn diese hintereinander angeordnet und zu dem Läuferblechpaket gestapelt werden. Aus den vorstehend ebenfalls bereits erwähnten Gründen, kann es vorkommen, dass die Ausstanzungen der Einzelbleche nach dem Zusammenfügen zu dem Läuferblechpaket nicht exakt fluchten. Es können sich in axialer Richtung in den Nuten Diskontinuitäten in Gestalt kleiner Stufen ausbilden. Insbesondere mittels einer Druck-Gusstechnik kann sichergestellt werden, dass die Nuten auch im Bereich dieser Diskontinuitäten vollständig mit dem Material des elektrischen Leiters ausgefüllt sind. Besonders gut eignen sich hierfür aus Aluminium druckgegossene Leiter, die abgesehen von den Diskontinuitäten eine Stabform haben.

Weitere Merkmale, Vorteile und Einzelheiten der Erfindung ergeben sich aus der nachfolgenden Beschreibung von Ausführungsbeispielen anhand der Zeichnung. Es zeigt:
- FIG 1: ein Ausführungsbeispiel einer Asynchronmaschine mit einem Läufer mit einer nach innen gewölbten Läuferaußenkontur in einer Längsschnittdarstellung,
- FIG 2: einen Teilquerschnitt durch den Läufer gemäß FIG 1 und
- FIG 3: einen Teilquerschnitt durch ein weiteres Ausführungsbeispiel eines Läufers für eine Asynchronmaschine.

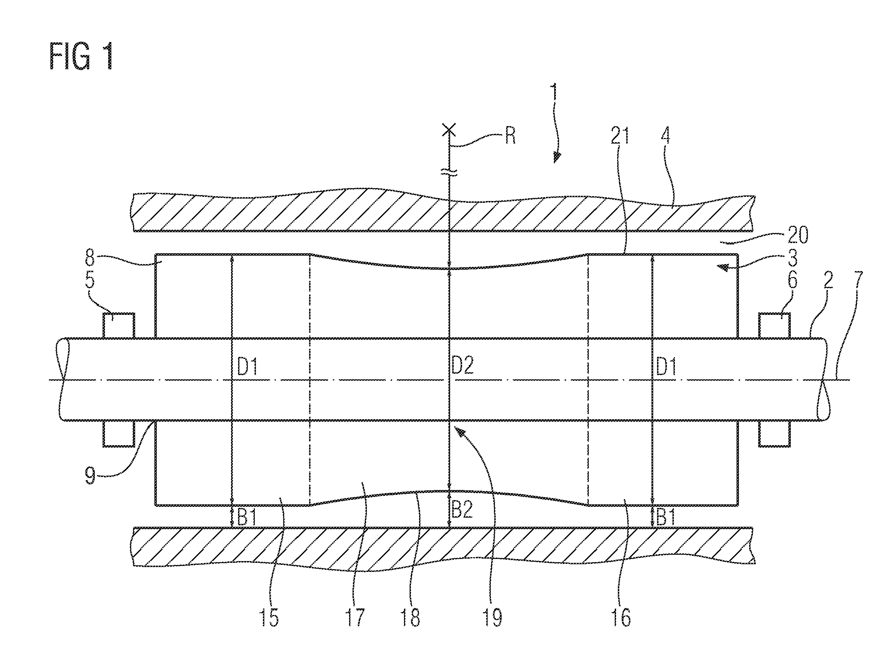

Einander entsprechende Teile sind in FIG 1 bis 3 mit denselben Bezugszeichen versehen.

In FIG 1 ist ein Ausführungsbeispiel einer Asynchronmaschine 1 mit einem auf einer Welle 2 drehfest montierten Läufer 3 und einem nur schematisch angedeuteten Ständer 4 gezeigt. Im Ausführungsbeispiel ist die Asynchronmaschine 1 ein Elektromotor. Grundsätzlich kann sie aber ebenso als Generator ausgebildet sein. Der Ständer 4 nimmt ein nicht gezeigtes elektrisches Wicklungssystem auf, das die Polzahl der Asynchronmaschine 1 bestimmt. Im Ausführungsbeispiel ist die Asynchronmaschine 1 zweipolig. Die Welle 2 ist mittels zweier Lager 5 und 6 um eine Drehachse 7 drehbar gelagert. Die Lager 5 und 6 sind auf beiden axialen Stirnseiten des Läufers 3 angeordnet. Der Läufer 3 ist symmetrisch zwischen den Lagern 5 und 6 platziert.

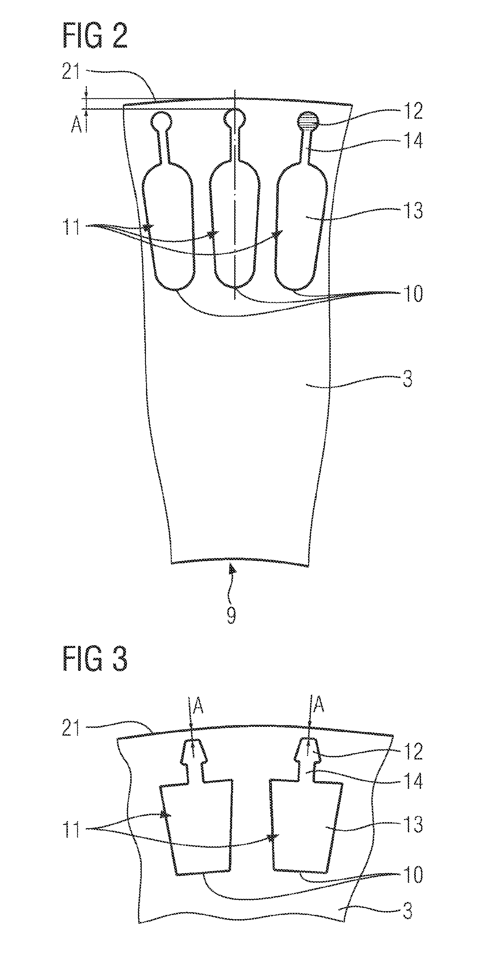

Der Läufer 3 umfasst ein Läuferblechpaket 8 aus einer Vielzahl an Einzelblechen, beispielsweise aus über 1150 Einzelblechen. Die Einzelbleche haben jeweils mehrere Ausstanzungen, nämlich eine zentrale Ausstanzung für ein Achsloch 9 des Läufers 3, durch das die Welle 2 hindurchgeführt ist, und für mehrere in Umfangsrichtung gleichmäßig verteilt angeordnete Stablöcher 10. Letztere können unterschiedliche Gestalt annehmen. Beispiele sind aus FIG 2 und 3 ersichtlich.

Die Stablöcher 10 sind jeweils mit einem druckgegossenen Alu-Stab 11 ausgefüllt, dessen außen angeordneter Teil einen Anlaufstab 12 und dessen innen angeordneter Teil einen Betriebsstab 13 bildet, wobei beide Stäbe 12 und 13 mittels eines schmalen Halselements 14 miteinander verbunden sind. Die elektrisch leitfähigen Alu-Stäbe 11, von denen im Ausführungsbeispiel gemäß FIG 1 insgesamt 52 vorgesehen sind, verlaufen im Wesentlichen axial, d.h. in Richtung der Drehachse 7. Sie sind Bestandteil eines nicht näher gezeigten Kurzschlusskäfigs. Letzterer umfasst außerdem an beiden axialen Stirnseiten des Läufers 3 Kurzschlussringe, die alle Alu-Stäbe 11 miteinander elektrisch kurz schließen.

Der in einer zylindrischen Bohrung des Ständers 4 angeordnete Läufer 3 setzt sich aus mehreren Abschnitten zusammen. Er hat zwei zylinderförmige Endabschnitte 15 und 16, zwischen denen ein zentraler Abschnitt 17 mit einer nach innen gewölbten rotationssymmetrischen Außenkontur 18 angeordnet ist. Die Wölbung der Außenkontur 18 ist konkav, sodass sich in der Längsschnittdarstellung gemäß FIG 1 eine bikonkave Form ergibt.

Die Wölbung der Außenkontur 18 ist in FIG 1 nicht maßstäblich, sondern stark übertrieben gezeigt. Sie hat einen sehr großen Krümmungsradius R, der im Ausführungsbeispiel einen Wert von etwa 42 m annimmt. Demgegenüber beträgt die komplette axiale Länge des Läufers 3 nur etwa 0,58 m, wobei die beiden Endabschnitte jeweils 0,15 m lang sind und der zentrale Abschnitt 0,28 m lang ist. Im Bereich der Endabschnitte 15 und 16 hat der Läufer 3 einen konstanten Außendurchmesser D1 von etwa 0,3644 m, wohingegen sich der Außendurchmesser innerhalb des zentralen Abschnitts 17 kontinuierlich verändert. Ausgehend von dem Außendurchmesser D1 verringert er sich von beiden axialen Seiten bis zu einem in einer Läufermitte 19 vorliegenden minimalen Außendurchmesser D2 von 0,3624 m.

Aufgrund dieser speziellen Ausgestaltung der Außenkontur 18 des Läufers 3 insbesondere im zentralen Abschnitt 17 hat auch ein Luftspalt 20 zwischen dem Läufer 3 und dem Ständer 4 zumindest im Stillstand der Asynchronmaschine 1 eine in axialer Richtung variierende Ausdehnung. Im Bereich der Endabschnitte 15 und 16 hat er eine konstante Breite B1 von 2,8 mm, wohingegen seine Breite innerhalb des zentralen Abschnitts 17 kontinuierlich bis zur Läufermitte 19 zunimmt. Der maximale Wert der Breite B2 des Luftspalts 20 in der Läufermitte 19 beträgt beim Ausführungsbeispiel 3,8 mm. Andere Werte für die Abmessung des Luftspalts 20 sind ebenfalls möglich. So kann seine maximale Breite bei anderen Asynchronmaschinen in der Läufermitte 19 bei etwa 4,5 mm liegen.

Die Außenkontur des Läufers 3 und vor allem die nach innen gewölbte Außenkontur 18 im zentralen Abschnitt 17 wird durch ein nach dem Zusammensetzen des Läuferblechpakets 8 durchgeführtes Überdrehen hergestellt. Mittels einer NC-Drehmaschine kann dem Läufer 3 eine weitgehend beliebig geformte rotationssymmetrische Außenkontur gegeben werden.

Im Folgenden werden die Wirkungsweise und besondere Vorteile der Asynchronmaschine 1 und insbesondere des die gewölbte Außenkontur 18 aufweisenden Läufers 3 näher beschrieben.

Die nach innen gewölbte Außenkontur 18 ist an die während des Betriebs auftretende Verbiegung des Läufers 3 angepasst. Bei der im Ausführungsbeispiel vorgesehenen symmetrischen Lagerung sowie symmetrischen Bauweise des Läufers 3 ist die Verbiegung im Bereich der Läufermitte 19 am stärksten ausgeprägt. Deshalb ist in diesem Bereich der stärkste Materialabtrag vorgesehen. Der Läufer 3 hat hier seinen minimalen Außendurchmesser D2. Dadurch wird die Wirkung der Verbiegung weitgehend kompensiert. Ein Anstreifen des Läufers 3 am Ständer 4 wird sicher verhindert.

Abgesehen von der Gestaltung des Läufers 3 ist die Asynchronmaschine 1 vergleichbar einer anderen Maschine, die eine konstante Luftspaltbreite von etwa 3,6 mm aufweist. Demgegenüber variiert die Luftspaltbreite bei der Asynchronmaschine 1 in axialer Richtung. Im Bereich der Endabschnitte 15 und 16 ist sie deutlich kleiner als der Vergleichswert von 3,6 mm, wohingegen sie zumindest in der Läufermitte 19 etwas größer ist. Im Durchschnitt ergibt sich für die Asynchronmaschine 1 aber ein gemittelter Wert der Luftspaltbreite, der niedriger ist als bei der Vergleichsmaschine. Deshalb hat die Asynchronmaschine 1 einen besseren Wirkungsgrad.

Weitere Vorteile sind ein besseres Anlaufverhalten, eine geringere Geräuschentwicklung und die Möglichkeit, für die Welle 2 einen kleineren Durchmesser zu verwenden, da es weniger auf deren mechanische Steifigkeit ankommt. Daraus ergibt sich dann auch das Potential für eine Material- und Gewichtsersparnis.

Das bessere Anlaufverhalten wird auch durch eine geringfügige Modifikation der Position der Stablöcher 10 in Relation zu einer äußeren Umfangsfläche 21 des Läufers 3 erreicht. Bei der elektrischen Berechnung des Läufers 3 resultiert eine Vorgabe für einen aus FIG 2 und 3 ersichtlichen Anlauf A, der einen Abstand der Anlaufstäbe 12 von der äußeren Umfangsfläche 21 angibt. Hierbei geht man allerdings von einer exakt zylindrischen Form des Läufers 3 aus, also ohne die nach innen gerichtete Wölbung aufgrund des Materialabtrags.

Um mit einem über die axiale Länge des Läufers 3 gemittelten Wert des Anlaufs A möglichst nahe an dem Vorgabewert aus der elektrischen Berechnung zu liegen, wird der Anlauf A im Bereich der Endabschnitte 15 und 16 etwas reduziert, d.h. die Stablöcher 10 sind hier etwas näher an der äußeren Umfangsfläche 21 platziert. Im zentralen Abschnitt 17 wird der Anlauf A dagegen aufgrund des nachträglich noch erfolgenden Materialabtrags bezogen auf die ursprünglich zylindrische äußere Umfangsfläche radial etwas weiter nach innen, also in Richtung zur Drehachse 7 versetzt.

Im Ausführungsbeispiel beträgt ein Anlauf A1 im Bereich der der Endabschnitte 15 und 16 konstant etwa 0,6 mm. In der Läufermitte 19 beträgt ein Anlauf A2, der den Abstand des Stablochs 10 des dort angeordneten Einzelblechs von der dort den minimalen Außendurchmesser D2 aufweisenden äußeren Umfangsfläche 21 angibt, etwa 0,58 mm.

Insgesamt gibt es zwei verschiedene Stanzvorgaben für die Einzelbleche des Läuferblechpakets 8, eine erste für die Einzelbleche der beiden Endabschnitte 15 und 16 und eine zweite für die Einzelbleche des zentralen Abschnitts 17.

Dadurch resultiert an den beiden Grenzen zwischen den Endabschnitten 15 und 16 einerseits und dem zentralen Abschnitt 17 andererseits jeweils ein stufenförmiger Sprung in den durch die Stablöcher 10 der gestapelten Einzelbleche gebildeten Nuten. Das zur Bildung der Anlauf- und Betriebsstäbe 12 bzw. 13 unter hohem Druck in diese Nuten eingegossene flüssige Aluminium füllt diese stufenförmigen Übergangszonen komplett mit elektrisch leitfähigem Material aus, sodass die wesentlichen elektrischen Funktionen des Kurzschlusskäfigs voll erhalten bleiben.

## Patentansprüche

1. Läufer einer elektrischen Asynchronmaschine (1) umfassend
a) ein in Richtung einer Drehachse (7) geschichtetes Läuferblechpaket (8), das mit in Umfangsrichtung gleichmäßig verteilt angeordneten elektrischen Leitern versehen ist, wobei
b) das Läuferblechpaket (8) mindestens einen gewölbten Abschnitt (17) mit einer äußeren Umfangsfläche (21) umfasst, die im Stillstand eine nach innen gewölbte Kontur (18) hat.

2. Läufer nach Anspruch 1, **dadurch gekennzeichnet, dass** die gewölbte Kontur (18) konkav ausgebildet ist.

3. Läufer nach Anspruch 1, **dadurch gekennzeichnet, dass** das Läuferblechpaket (8) in Richtung der Drehachse (7) betrachtet eine Läufermitte (19) aufweist, und ein Außenumfang (D1, D2) des Läuferblechpakets (8) zur Läufermitte (19) hin abnimmt.

4. Läufer nach Anspruch 1, **dadurch gekennzeichnet, dass** das Läuferblechpaket (8) mehrere in Richtung der Drehachse (7) hintereinander angeordnete Abschnitte (15,16,17) umfasst, wobei benachbarte Abschnitte (15,17;17,16) jeweils eine unterschiedlich ausgebildete äußere Umfangsfläche (21) aufweisen.

5. Läufer nach Anspruch 1, **dadurch gekennzeichnet, dass** sich der gewölbte Abschnitt (17) in Richtung der Drehachse (7) betrachtet im Bereich einer Läufermitte (19) befindet.

6. Läufer nach Anspruch 1, **dadurch gekennzeichnet, dass** das Läuferblechpaket (8) einen maximalen und einen minimalen Außenumfang (D1,D2) aufweist, und eine Abweichung zwischen dem maximalen und dem minimalen Außenumfang (D1,D2) im Bereich zwischen einigen 100 µm und einigen 1 mm liegt.

7. Läufer nach Anspruch 1, **dadurch gekennzeichnet, dass** ein Abstand (A,A1,A2) der elektrischen Leiter von der äußeren Umfangsfläche (21) in Richtung der Drehachse (7) betrachtet variiert.

8. Läufer nach Anspruch 7, **dadurch gekennzeichnet, dass** der Abstand (A1) an axialen Enden des Läuferblechpakets (8) im Bereich zwischen 1,04 mm und 1,56 mm liegt.

9. Läufer nach Anspruch 7 oder 8, **dadurch gekennzeichnet, dass** der Abstand (A2) in einer axialen Läufermitte (19) des Läuferblechpakets (8) im Bereich zwischen 1,1 mm und 1,58 mm liegt.

10. Läufer nach Anspruch 1, **dadurch gekennzeichnet, dass** die elektrischen Leiter als in Nuten des Läuferblechpakets (8) eingegossene Stäbe (11,12,13,14), insbesondere aus Aluminium oder Kupfer, ausgebildet sind.

11. Elektrische Maschine, insbesondere eine Synchron- oder Asynchronmaschine, mit einem Ständer (4) und einem Läufer nach einem oder mehreren der Ansprüche 1 bis 10.
